# EUROPÄISCHE PATENTSCHRIFT

(11) **EP 1 691 598 B1**
(45) Veröffentlichungstag und Bekanntmachung des Hinweises auf die Patenterteilung: **23.01.2008**
(21) Anmeldenummer: 04797986.9
(22) Anmeldetag: 18.11.2004
(51) Int. Cl.: A01G 7/06

(54) **VORRICHTUNG UND VERFAHREN ZUM BEHANDELN VON HOLZGEWÄCHSEN**
METHOD AND DEVICE FOR TREATING TREES
DISPOSITIF ET PROCEDE POUR TRAITER DES ARBRES

(30) Priorität: 01.12.2003 DE 10356040
(43) Veröffentlichungstag der Anmeldung: 23.08.2006
(73) Patentinhaber: Bayer CropScience AG, 40789 Monheim (DE)
(72) Erfinder: HEIDECKE, Cordula, 09661 Hainichen (DE); RODEKOHR, Diana, 42657 Solingen (DE); HÖLTERS, Jürgen, 51375 Leverkusen (DE); ROLOFF, Andreas, 01737 Tharandt (DE)
(86) Internationale Anmeldenummer: PCT/EP2004/013099
(87) Internationale Veröffentlichungsnummer: WO 2005/060733

(56) Entgegenhaltungen:
- DE-C- 951 119
- US-A- 3 834 075
- US-A- 4 103 456
- US-A1- 2002 157 307

## Beschreibung

Die vorliegende Erfindung betrifft Vorrichtungen zum Behandeln von Holzgewächsen, Apparat enthaltend diese Vorrichtung sowie Verfahren zum Behandeln von Holzgewächsen.

Die Behandlung von Holzgewächsen mit Fungiziden, Insektiziden, Akariziden oder Nährlösungen durch Einbringen der Behandlungsmittel in den Boden oder auf das Blattwerk erfordert den Einsatz großer Mengen der jeweiligen Behandlungsmittel, von denen nur Bruchteile über relativ kurze Zeiträume, bis die Behandlungsmittel durch Niederschlag ab- bzw. ausgewaschen sind, wirksam werden.

Es hat daher bereits Vorschläge gegeben, die Behandlungsmittel in die Wasser und Nährsalze transportierenden Leitelemente des Splintholzes zu injizieren, so dass diese mit der Nährsalzlösung in der gesamten Pflanze bis in die Blätter transportiert werden.

WO98/42181 beschreibt eine Injektionsnadel mit pyramidenförmiger Spitze und seitlicher Bohrung unmittelbar hinter dieser Spitze.

BE 859 547 beschreibt einen Injektionsbohrer mit mehreren seitlichen Bohrungen, welche über die gesamte Länge des Bohrers und den gesamten Umfang des Bohrers verteilt sind.

US 4 103 456 beschreibt eine Injektionsnadel mit mehreren seitlichen Bohrungen um den Umfang der Nadel verteilt, einem Gewinde und einem Zwei-Wege-Hahn.

Die Druckschrift US 3,834,075 offenbart eine Vorrichtung zum Behandeln von Holzgewächsen, die mehrere radiale schlitzförmige Öffnungen aufweist.

Die Druckschrift DE-PS 951 119 offenbart, am Außenumfang Einschnitte oder Rillen vorzusehen, also eine Mehrzahl an radialen schlitzförmigen Öffnungen, die das Einspritzen eines Stoffes erleichtern sollen.

Die bekannten Vorrichtungen weisen verschiedene Nachteile.auf. So sind die Applikationsdauern lang, die benötigten Aufwandmengen hoch, die Schädigung der behandelten Holzpflanzen signifikant. Darüber hinaus sind die bekannten Vorrichtungen teilweise schwierig zu fertigen und/oder zeigen nur eine geringe Stabilität. Die Verfahren zur Behandlung von Holzgewächsen unter Verwendung der vorstehend genannten Vorrichtungen sind teilweise langwierig und/oder kompliziert.

Es ist demnach die Aufgabe zu lösen, Vorrichtungen zum Injizieren von Pflanzenbehandlungsmitteln bereitzustellen, die ein oder mehrere der vorgenannten Nachteile nicht aufweisen.

Diese Aufgabe wird durch die nachstehend beschriebenen Vorrichtungen zum Injizieren von Pflanzenbehandlungsmitteln gelöst.

Erfindungsgemäß wird eine Vorrichtung vorgeschlagen, enthaltend ein zylindrisches Injektionselement mit einer axialen Bohrung, einer radialen schlitzförmigen Öffnung welche mit der vorgenannten Bohrung verbunden ist und dessen Längsachse im wesentlichen parallel zur axialen Bohrung verläuft; ein Element zur Befestigung und ein Element zum Anschluss eines Vorratsgefäßes, wobei nur eine radiale Schiltzförmige öffnung vorhanden ist.

Das Ende der Vorrichtung, welches das Element zum Anschluss eines Vorratsgefäßes trägt, wird als hinteres Ende, bzw. hinten bezeichnet; das gegenüberliegende Ende der Vorrichtung ist demgemäß das vordere Ende bzw. vorne. Die gesamte Vorrichtung wird auch als Injektionsnadel bezeichnet.

Das vordere Ende des zylindrischen Injektionselementes kann verschiedene, z.B. durch die Herstellung bedingte Formen aufweisen. Möglich ist die Ausführung in Form einer Spitze, einer sphärischen Rundung oder einer ebenen Abschlussfläche. Bevorzugt ist die Ausführung einer ebenen Abschlussfläche.

Die axiale Bohrung durchläuft entweder die gesamte Injektionsnadel oder nur einen Teil der Injektionsnadel ("Topfbohrung"). Bevorzugt wird eine Injektionsnadel welche mit einer axialen Topfbohrung versehen ist. Im Falle einer Topfbohrung entspricht die verbleibende Materialstärke beispielsweise dem Durchmesser des zylindrischen Injektionselementes. In einer alternativen Ausführungsform entspricht die verbleibende Materialstärke der Wanddicke des zylindrischen Injektionselementes. Die verbleibende Materialstärke beträgt beispielsweise 0,2 - 10 mm, bevorzugt 3 - 6 mm, besonders bevorzugt 5 mm.

Die schlitzförmige Öffnung ist durch ihre Länge, Breite, Form und Form der Seitenflächen charakterisiert. Die Länge der radialen schlitzförmige Öffnung kann in einem weiten Bereich variiert werden. Die schlitzförmige Öffnung reicht maximal von der Spitze der Injektionsnadel bist zum Element zur Befestigung. Bevorzugt beginnt die schlitzförmige Öffnung in einem Abstand x von der Spitze, wobei der Abstand x dem Durchmesser der Injektionsnadel entspricht. Die Länge der schlitzförmige Öffnung beträgt beispielsweise 5 - 20 mm, bevorzugt 8 -15 mm, besonders bevorzugt 10 mm. Die Breite der schlitzförmige Öffnung kann in einem weiten Bereich variiert werden. Die Breite der schlitzförmigen Öffnung beträgt beispielsweise 1/10 bis 10/10, bevorzugt 2/10 bis 8/10, besonders bevorzugt 4/10 bis 6/10 des Durchmessers der Injektionsnadel. Die Breite der schlitzförmigen Öffnung beträgt beispielsweise 0,5 - 6 mm, bevorzugt beträgt sie beispielsweise 2 - 5 mm. Die schlitzförmige Öffnung kann in Form eines Langloches oder eines Rechteckes ausgeführt sein. Die Längsachse verläuft im wesentlichen parallel zur Längsachse der Injektionsnadel. Die Seitenflächen der schlitzförmigen Öffnung können entweder parallel zueinander oder radial angeordnet sein oder einen zwischen diesen Extremen liegenden Winkel einnehmen.

Das Element zur Befestigung kann in Form von einem oder mehreren Dichtungs- bzw. Pressringen und/oder in Form eines Gewindes ausgebildet sein. Als Materialien für die Dichtungs- bzw. Pressringe sind alle elastischen Materialien, wie z.B. natürlicher oder synthetischer Kautschuk oder Polydiene geeignet. Die Gewindeformen können in einem breiten Bereich variiert werden. Sowohl konisch zulaufende Gewinde als auch parallel verlaufende Gewinde können verwendet werden. Gewinde sind als Element zur Befestigung bevorzugt. Besonders bevorzugt sind parallel verlaufende Gewinde (Maschinengewinde). Das Element zur Befestigung fungiert gleichzeitig als Element zur Abdichtung der Bohrung im Holzgewächs gegenüber der Umwelt.

Das Element zum Anschluß eines Vorratsgefäßes ist dem Fachmann bekannt. Mögliche Ausführungsformen sind Außen- oder Innengewinde, Bajonett-Verschlüsse oder andere Schnellverschlüsse ("Quick fit").

Zusätzlich kann die Injektionsnadel mit einem Element zur Justierung versehen werden. Als geeignetes Element zur Justierung eignen sich Angriffsflächen außen, beispielsweise Vierkant oder Sechskant; Angriffsflächen innen, beispielsweise Schlitz, Kreuzschlitz, Innensechskant, Schrauben oder Knebel.

Zusätzlich kann die Injektionsnadel mit einem Verschlusselement versehen werden. Das Verschlusselement kann als Zwei-Wege-Hahn oder als Drei-Wege-Hahn ausgebildet sein. Bevorzugt wird ein Drei-Wege-Hahn verwendet. Das Verschlusselement kann dauerhaft oder lösbar mit der Injektionsnadel verbunden sein. Sofern das Verschlusselement dauerhaft mit der Injektionsnadel verbunden ist, kann es in der Verlängerung der schlitzförmigen Öffnung angeordnet werden und so die Funktion der Markierung gleichzeitig übernehmen.

Zusätzlich kann die Injektionsnadel mit einem Element zur Markierung versehen werden, welche die Position der schlitzförmigen Öffnung anzeigt. Dieses Element kann beispielsweise eine farbliche Markierung oder eine Nut sein. Als Element zur Markierung kann durch seine Ausgestaltung und / oder Positionierung auch das Element zur Justierung oder das Verschlusselement dienen.

Als Material für die Injektionsnadel kommen Werkstoffe aus Metall oder Kunststoff in Betracht. Beispiele für metallische Werkstoffe sind Legierungen auf Basis von Eisen, Kupfer öder Aluminium. Bevorzugte metallische Werkstoffe sind Messinglegierungen und Edelstahllegierungen. Beispiele für Kunststoffe sind Polyolefine, Polyester, Polyamide, Poylcarbonate sowie Blends dieser Kunststoffe.

Die Erfindung wird nachfolgend anhand der beigefügten Figuren, welche lediglich eine Ausführung darstellen, näher erläutert:

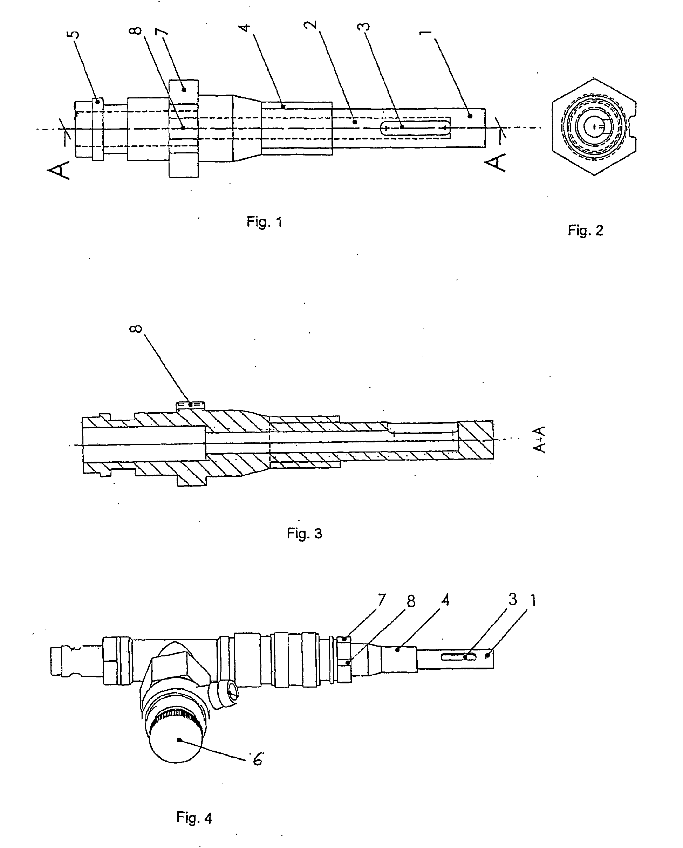

- Fig. 1: zeigt eine erfindungsgemäße Injektionsnadel in Seitenansicht
- Fig. 2: zeigt eine erfindungsgemäße Injektionsnadel in Aufsicht
- Fig. 3: zeigt eine erfindungsgemäße Injektionsnadel in Seitenansicht entlang des Schrittes A-A
- Fig. 4: zeigt eine alternative Ausführung einer erfindungsgemäßen Injektionsnadel in dreidimensionaler Darstellung.

Folgende Bezugszeichen werden in den Figuren verwendet:
(1) zylindrisches Injektionselement
(2) axiale Bohrung
(3) schlitzförmige Öffnung
(4) Element zur Befestigung
(5) Element zum Anschluss eines Vorratsgefäßes
(6) Verschlusselement
(7) Element zur Justierung
(8) Element zur Markierung

Die vorliegende Erfindung betrifft ferner einen Apparat zum Behandeln von Holzgewächsen, enthaltend i) eine Injektionsnadel wie vorstehend beschrieben über eine Leitung verbunden mit ii) einer Vorrichtung zur Aufbewahrung von Pflanzenbehandlungsmitteln welche ihrerseits über eine Leitung mit iii) einer Vorrichtung zur Erzeugung des Drucks verbunden ist. In einer bevorzugten Ausführungsform des Apparates ist die Injektionsnadel mit der Vorrichtung zum Aufbewahren über eine flexible, druckbeständige Leitung verbunden. In einer weiteren bevorzugten Ausführungsform des Apparates ist die Vorrichtung zur Aufbewahrung von Pflanzenbehandlungsmitteln und die Vorrichtung zur Erzeugung des Drucks in einem gemeinsamen Gehäuse installiert. In einer weiteren bevorzugten Ausführungsform des Apparates sind mehrere Injektionsnadeln über eine flexible Leitung, welche Ring- oder Sternförmig ausgebildet ist, mit der Vorrichtung zur Aufbewahrung von Pflanzenbehandlungsmitteln verbunden. Die vorstehenden Ausführungsformen des Apparates können gegebenenfalls miteinander kombiniert werden.

Gegenstand der vorliegenden Erfindung ist weiterhin ein Verfahren zum Behandeln von Holzgewächsen, dadurch gekennzeichnet, dass in einem ersten Schritt die Rinde kleinflächig entfernt wird, ein in einem zweiten Schritt ein im wesentlichen waagerechtes Loch in den Stamm eines Holzgewächses gebohrt wird; in einem dritten Schritt die vorstehend beschriebenen Injektionsnadel in dieses Loch eingeführt, befestigt und so justiert wird, dass die radiale schlitzförmige Öffnung (3) senkrecht nach oben zeigt; in einem vierten Schritt das Pflanzenbehandlungsmittel über das Element zum Anschluss (5) so zugeführt wird, dass eine im wesentlichen blasenfreie Zuführung des Pflanzenbehandlungsmittels gewährleistet ist; in einem fünften Schritt das Pflanzenbehandlungsmittel unter Druck während des benötigten Zeitraums vom Holzgewächs aufnehmen lässt und in einem sechsten Schritt die vorstehend beschriebene Injektionsnadel löst und das verbleibende Loch gegebenenfalls mit dem Fachmann vertrauten Methoden verschließt.

Das Loch, welches im zweiten Schritt gebohrt wird, hat mindestens den Durchmesser des zylindrischen Injektionselementes und übersteigt dessen Durchmesser um maximal 1/10. Bevorzugt sind der Durchmesser des Loches und des zylindrischen Injektionselementes identisch. Die Tiefe des Loches richtet sich nach der Stärke des Wasser transportierenden Splintholzes. Das Loch soll einerseits so flach wie möglich andererseits jedoch so tief wie die Injektionsnadel sein. Im allgemeinen ist eine Tiefe von 1 - 10 cm ausreichend. Das Loch wird im wesentlichen waagerecht und im wesentlichen axial ausgerichtet. Das Loch kann mit üblichen Bohrern erzeugt werden. Eine Möglichkeit stellt die Verwendung von Spiral-Holzbohrern dar. Eine alternative Möglichkeit stellt die Verwendung von Schlangen-Holzbohrern dar.

Der Druck, unter welchem das Pflanzenbehandlungsmittel im vierten Schritt einwirkt, kann in einem breiten Bereich variiert werden. Bevorzugt ist ein Druckbereich, der über dem Umgebungsdruck liegt, aber das Holzgewächs nicht unnötig schädigt und eine sichere Verankerung der Injektionsnadel gewährleistet. Beispielsweise seien Drücke von 1-30 bar angeführt, bevorzugt 1-10 bar, besonders bevorzugt 1,5 - 8 bar.

Als Pflanzenbehandlungsmittel kommen alle Substanzen in Betracht, die auf Holzgewächse Einfluss haben. Dies sind insbesondere Substanzen mit fungizider, insektizider, akarizider, nematizider und herbizider Wirkung sowie Dünger bzw. Nährstoffe. Diese Substanzen sind dem Fachmann bekannt und werden z.B. beschrieben in "The Pesticied Manual, 10th edition, Britisch Crop Protection Council". Besonders geeignet sind Insektizide aus der Klasse der Nicotinyle, der Neonicotinyle, der Pyrethroide, der organischen Phosphate, der Ketoenole und Fosetyl-Aluminium. Die Pflanzenbehandlungsmittel werden in flüssiger Formulierung verwendet. Geeignet Formulierungen sind Lösungen, Emulsionen, Suspensionen.

Als Holzgewächse kommen Bäume (verholzte, aufrechte, ausdauernde Pflanzen die bei ungestörtem Wachstum eine Höhe von mindestens 6 m erreichen und einen astreinen unteren Stammabschnitt aufweisen) und Sträucher (verholzte, dicht über dem Boden verzweigte, ausdauernde Pflanzen) in Betracht. Bevorzugte Holzgewächse sind Laubbäume. Zu nennen sind insbesondere zerstreutporige und ringporige Laubbaumarten. Besonders bevorzugt sind zerstreutporige Laubbaumarten. Besonders bevorzugt sind ebenfalls Bäume der Gattung Pinus. Ganz besonders bevorzugt sind Rosskastanie (*Aesculus* spec.), Platane (*Platanus* spec.), Linde (*Tilia* spec.) und Ahorn (*Acer* spec.) sowie Eukalyptus (*Myrtaceae* spec.) und Palme . Bevorzugt werden Holzgewächse, deren Stammdurchmesser größer als 10 cm ist. Besonders bevorzugt werden Holzgewächse, deren Stammdurchmesser größer als 20 cm ist.

Eine blasenfreie Zuführung des Pflanzenbehandlungsmittels ist dem Fachmann bekannt. Dies kann z.B. dadurch erreicht werden, dass im System vorhandene Luft entfernt wird. Alternativ kann durch die Verwendung eines Drei-Wege-Hahns zunächst so lange Pflanzenbehandlungsmittel gefördert werden, bis das gesamte System blasenfrei ist und erst dann durch umlegen des Hahns Pflanzenbehandlungsmittel in den Stamm befördert werden.

In einem alternativen Verfahren können mehrere Injektionen an demselben Holzgewächs zeitgleich entlang des Stammumfangs verteilt, gegebenenfalls in verschiedener Höhe, durchgeführt werden.

Die vorstehende Erfindung wird durch die nachstehenden Beispiele verdeutlicht.

## Patentansprüche

1. Vorrichtung zum Behandeln von Holzgewächsen, enthaltend ein zylindrisches Injektionselement (1) mit einer axialen Bohrung (2); einer radialen schlitzförmigen Öffnung (3), welche mit der Bohrung (2) verbunden ist, und dessen Längsachse im wesentlichen parallel zur axialen Bohrung (2) verläuft; einem Element zur Befestigung (4) und ein Element zum Anschluss eines Vorratsgefäßes (5), **dadurch gekennzeichnet, dass** nur eine radiale schlitzförmige Öffnung vorhanden ist.

2. Vorrichtung nach Anspruch 1, **dadurch gekennzeichnet, dass** die axiale Bohrung (2) als Topfbohrung ausgeführt ist.

3. Vorrichtung nach Anspruch 1 oder 2, **dadurch gekennzeichnet, dass** zwischen dem Element zur Befestigung (4) und dem Element zum Anschluss eines Vorratsgefäßes (5) ein Element zum Verschließen (6) angeordnet ist.

4. Vorrichtung nach Anspruch 3, **dadurch gekennzeichnet, dass** das Element zum Verschließen (6) ein Drei-Wege-Hahn ist.

5. Vorrichtung nach Anspruch 1 bis 4, **dadurch gekennzeichnet, dass** das Element zur Befestigung (4) ein Gewinde ist.

6. Vorrichtung nach Anspruch 1 bis 5, **dadurch gekennzeichnet, dass** hinter dem Element zur Befestigung (4) ein Element zum Eindrehen und/oder Justieren (7) der Vorrichtung angeordnet ist.

7. Vorrichtung nach Anspruch 1 bis 6, **dadurch gekennzeichnet, dass** ein Element zur Markierung (8) hinter dem Element zur Befestigung (4) vorgesehen ist, welches die Lage der radialen schlitzförmigen Öffnung (3) anzeigt.

8. Verfahren zum Behandeln von Holzgewächsen, **dadurch gekennzeichnet, dass**
in einem ersten Schritt die Rinde kleinflächig entfernt wird;
in einem zweiten Schritt ein im wesentlichen waagerechtes Loch in den Stamm eines Holzgewächses gebohrt wird;
in einem dritten Schritt die Vorrichtung nach Anspruch 1 bis 7 in dieses Loch eingeführt, befestigt und so justiert wird, dass die radiale schlitzförmige Öffnung (3) senkrecht nach oben zeigt;
in einem vierten Schritt das Pflanzenbehandlungsmittel über das Element zum Anschluss (5) so zugeführt wird, dass eine im wesentlichen blasenfreie Zuführung des Pflanzenbehandlungsmittels gewährleistet ist;
in einem fünften Schritt das Pflanzenbehandlungsmittel unter Druck während des benötigten Zeitraums vom Holzgewächs aufnehmen lässt und
in einem sechsten Schritt die vorstehend beschriebene Injektionsnadel löst und das verbleibende Loch gegebenenfalls mit dem Fachmann vertrauten Methoden verschließt.

9. Verfahren nach Anspruch 8, **dadurch gekennzeichnet, dass** mehrere Injektionen an demselben Holzgewächs zeitgleich entlang des Stammumfangs durchgeführt werden.

10. Apparat zum Behandeln von Holzpflanzen, enthaltend eine oder mehrere Vorrichtungen nach Anspruch 1 bis 7 verbunden mit einer Vorrichtung zur Aufbewahrung von Pflanzenbehandlungsmitteln und einer Vorrichtung zur Erzeugung von Druck.

## Claims

1. Device for treating woody plants, comprising a cylindrical injection element (1) equipped with an axial bore (2); a radial slot (3) which communicates with the above bore (2) and whose longitudinal axis is essentially parallel to the axial bore (2); a fixing element (4) and an element for connecting a reservoir (5), **characterized in that** only one radial slot is present.

2. Device according to Claim 1, **characterized in that** the axial bore (2) is embodied in the form of a pot bore.

3. Device according to Claim 1 or 2, **characterized in that** a sealing element (6) is arranged between the fixing element (4) and the element for connecting a reservoir (5).

4. Device according to Claim 3, **characterized in that** the sealing element (6) is a three-way cock.

5. Device according to any of Claims 1 to 4, **characterized in that** the fixing element (4) is a thread.

6. Device according to any of Claims 1 to 5, **characterized in that** an element for turning and/or adjusting (7) the device is arranged behind the fixing element (4).

7. Device according to any of Claims 1 to 6, **characterized in that** a marker element (8), which indicates the position of the radial slot (3), is provided behind the fixing element (4).

8. Method of treating woody plants, **characterized in that**
in a first step, a small area of bark is removed,
in a second step, an essentially horizontal hole is bored into the stem of a woody plant;
in a third step, the device according to any of Claims 1 to 7 is introduced into this borehole, fixed and adjusted in such a way that the radial slot (3) points vertically upwards;
in a fourth step, the plant treatment composition is delivered via the connection element (5) in such a way that an essentially bubble-free delivery of the plant treatment composition is ensured;
in a fifth step, the pressurized plant treatment composition is allowed to be taken up by the woody plant over the period required, and,
in a sixth step, the above-described cannula is detached and, if appropriate, the borehole which remains is sealed by methods with which the skilled worker is familiar.

9. Method according to Claim 8, **characterized in that** a plurality of injections are carried out simultaneously on one and the same woody plant along the circumference of the stem.

10. Apparatus for treating woody species, comprising one or more devices according to any of Claims 1 to 7 connected to a device for storing plant treatment compositions and a device for generating pressure.

## Revendications

1. Dispositif pour traiter des arbres, comprenant un élément d'injection cylindrique (1) avec un alésage axial (2), une ouverture radiale en forme de fente (3), qui est reliée à l'alésage (2), et dont l'axe longitudinal est essentiellement parallèle à l'alésage axial (2), un élément de fixation (4) et un élément de raccordement d'un récipient de réserve (5), **caractérisé en ce qu'**il ne comporte qu'une seule ouverture radiale en forme de fente.

2. Dispositif selon la revendication 1, **caractérisé en ce que** l'alésage axial (2) est un alésage borgne.

3. Dispositif selon la revendication 1 ou la revendication 2, **caractérisé en ce qu'**un élément de fermeture (6) est disposé entre l'élément de fixation (4) et l'élément de raccordement d'un récipient de réserve (5).

4. Dispositif selon la revendication 3, **caractérisé en ce que** l'élément de fermeture (6) est un robinet à trois voies.

5. Dispositif selon l'une quelconque des revendications 1 à 4, **caractérisé en ce que** l'élément de fixation (4) est un filet.

6. Dispositif selon l'une quelconque des revendications 1 à 5, **caractérisé en ce qu'**un élément pour visser et/ou ajuster (7) le dispositif est disposé derrière l'élément de fixation (4).

7. Dispositif selon l'une quelconque des revendications 1 à 6, **caractérisé en ce qu'**il est prévu un élément de marquage (8) derrière l'élément de fixation (4), pour indiquer la position de l'ouverture radiale en forme de fente (3).

8. Procédé pour traiter des arbres, **caractérisé en ce que**
- dans une première étape, on enlève l'écorce sur une petite surface;
- dans une deuxième étape, on perce un trou essentiellement horizontal dans le tronc d'un arbre;
- dans une troisième étape, on introduit dans ce trou le dispositif selon l'une quelconque des revendications 1 à 7, on le fixe et on l'ajuste de telle manière que l'ouverture radiale en forme de fente (3) soit orientée verticalement vers le haut;
- dans une quatrième étape, on injecte l'agent de traitement de la plante par l'élément de raccordement (5), de façon à garantir une injection essentiellement sans bulles d'air de l'agent de traitement des plantes;
- dans une cinquième étape, on laisse absorber l'agent de traitement des plantes par l'arbre pendant le temps nécessaire; et
- dans une sixième étape, on retire l'aiguille d'injection décrite plus haut et on ferme le trou subsistant éventuellement par des méthodes bien connues de l'homme du métier.

9. Procédé selon la revendication 8, **caractérisé en ce que** l'on effectue plusieurs injections dans le même arbre en même temps le long de la périphérie du tronc.

10. Appareil pour le traitement de végétaux ligneux, comprenant un ou plusieurs dispositifs selon l'une quelconque des revendications 1 à 7, en combinaison avec un dispositif pour conserver des agents de traitement des plantes et un dispositif de production de pression.
